# EUROPEAN PATENT APPLICATION

(11) **EP 4 099 537 A1**
(43) Date of publication of application: **07.12.2022**
(21) Application number: 21747283.6
(22) Date of filing: 12.01.2021
(51) Int. Cl.: H02J 7/35, H02J 1/00

(54) **POWER SUPPLY-DEMAND ADJUSTMENT SYSTEM AND POWER SUPPLY-DEMAND ADJUSTMENT METHOD**

(30) Priority: 31.01.2020 JP 2020014402
(71) Applicant: NTN Corporation, Osaka-shi, Osaka 550-0003 (JP)
(72) Inventor: MATSUNAGA, Yasuhiro, Kuwana-shi, Mie 511-0867 (JP)
(74) Representative: Müller, Enno
(86) International application number: PCT/JP2021/000610
(87) International publication number: WO 2021/153203

(57) **Abstract**

The present invention adjusts, in a combined power system including a main DC bus and a plurality of power systems, power supply and demand between the power systems.

The present invention is a power supply-demand adjustment system in which at least one of the power systems is a natural energy-using power system including at least a DC bus connected to the main DC bus, one or a plurality of power generation devices that generate power using natural energy, a system power supply device that receives commercial power from a power provider, and an electricity storage device that is charged from or discharges to the DC bus, a difference between respective output voltages that enable output to the DC bus is previously set between at least two of the one or plural power generation devices, the system power supply device, and the electricity storage device, and each of the power systems has a current meter that measures the amount and the direction of current flowing to and from the main DC bus.

## Description

### Field

The present invention relates to a power supply-demand adjustment system in a combined power system including a plurality of power systems.

### Background

In recent years, a regional energy management system and a building energy management system using natural energy have drawn attention. A common issue to these systems is maximizing utilization of power generated from natural energy and minimizing purchase of system power from electric power companies. Transmitting generated power to the supply side in proper quantities is also an issue.

### Citation List

### Patent Literatures

Patent Literature 1: Japanese Patent No. 6150072
Patent Literature 2: Japanese Patent Application Laid-open No. 2003-87969

### Summary

### Technical Problem

In Patent Literatures 1 and 2 cited above, power supply-demand adjustment is performed on the basis of information acquired from an external agency. However, if the server of the external agency is down or the communication infrastructure is down due to certain reasons, setting of the power price according to the supply-demand adjustment cannot be performed. Furthermore, the supply-demand adjustment does not function well.

In view of the circumstance described above, an object of the present invention is to provide a combined power system including a plurality of power systems, in which power supply and demand between the power systems can be effectively adjusted without a need to rely on the server of an external agency or the communication infrastructure.

### Solution to Problem

In order to achieve the above object, the present invention provides the following configurations.

An aspect of the present invention provides a power supply-demand adjustment system for adjusting, in a combined power system including a main DC bus and a plurality of power systems each connected to the main DC bus, power supply and demand between the power systems, wherein
at least one of the power systems is a natural energy-using power system including at least a DC bus connected to the main DC bus, one or a plurality of power generation devices that are each connected to the DC bus and that generate power using natural energy, a system power supply device that receives commercial power from a power provider, and an electricity storage device that is charged from or discharges to the DC bus, and a difference between respective output voltages that enable output to the DC bus is previously set between at least two of the one or plural power generation devices, the system power supply device, and the electricity storage device, and
each of the power systems has a current meter that measures an amount and a direction of current flowing to and from the main DC bus.

In the system of the above aspect, it is preferable that the power supply-demand adjustment system comprises:
a recording unit that records measurement values of the amount and the direction of current that have been measured by each of the current meters; and
a computing unit that determines a price of power to be sold to or purchased from power systems other than a relevant power system on a basis of the measurement values recorded in the recording unit.

As one exemplary mode, the computing unit determines a price of power to be sold to or purchased from power systems other than a relevant power system on a basis of integrated values of the amounts and the directions of current that have been measured.

As another exemplary mode, the power supply-demand adjustment system further comprises a voltmeter that measures a voltage of the main DC bus, wherein
the computing unit determines a price of power to be sold to or purchased from power systems other than a relevant power system on a basis of instantaneous values of the amount and the direction of current that have been measured, and the measured voltage of the main DC bus.

In the system of the above aspect, as an example, at least one of the power systems includes a load device connected to the DC bus.

In the system of the above aspect, as an example, at least one of the power systems includes only a load device.

In the system of the above aspect, as an example, at least one of the power systems includes only a system power supply device that receives commercial power.

An aspect of the present invention provides a power supply-demand adjustment method for adjusting, in a combined power system including a main DC bus and a plurality of power systems each connected to the main DC bus, power supply and demand between the power systems, wherein at least one of the power systems is a natural energy-using power system including a DC bus connected to the main DC bus, one or a plurality of power generation devices that are each connected to the DC bus and that generate power using natural energy, a system power supply device that receives commercial power from a power provider, and an electricity storage device that is charged from or discharges to the DC bus, and a difference between respective output voltages that enable output to the DC bus is previously set between at least two of the power generation devices, the system power supply device, and the electricity storage device, the method comprising:
measuring an amount and a direction of current flowing between each of the power systems and the main DC bus and determining a price of power to be sold to or purchased from each of the power systems on a basis of the amount and the direction of current that have been measured.

### Advantageous Effects of Invention

According to the present invention, it is possible to easily set the power price. Further, it is possible to determine and provide the power price reflecting the supply-demand situation promptly.

### Brief Description of Drawings

Fig. 1 is a block diagram schematically illustrating an example of a power supply-demand adjustment system according to a first embodiment of the present invention.
Fig. 2 is a block diagram for explaining an operation of a power system 1 illustrated in Fig. 1.
Fig. 3 illustrates an example of a state in which a voltage of a main DC bus MB of a combined power system has been determined.
Fig. 4 illustrates an example of measurement values of current meters of power systems when the power supply-demand balance is achieved in the whole power system as in Fig. 3.
Fig. 5 illustrates an example of a state in which a surplus is caused in generated power and the voltage of the main DC bus MB has increased to 290 V after the states illustrated in Figs. 3 and 4 are obtained.
Fig. 6 illustrates a second embodiment of the present invention.

### Description of Embodiments

Embodiments of the present invention will be described below with reference to the drawings that illustrate exemplary modes.

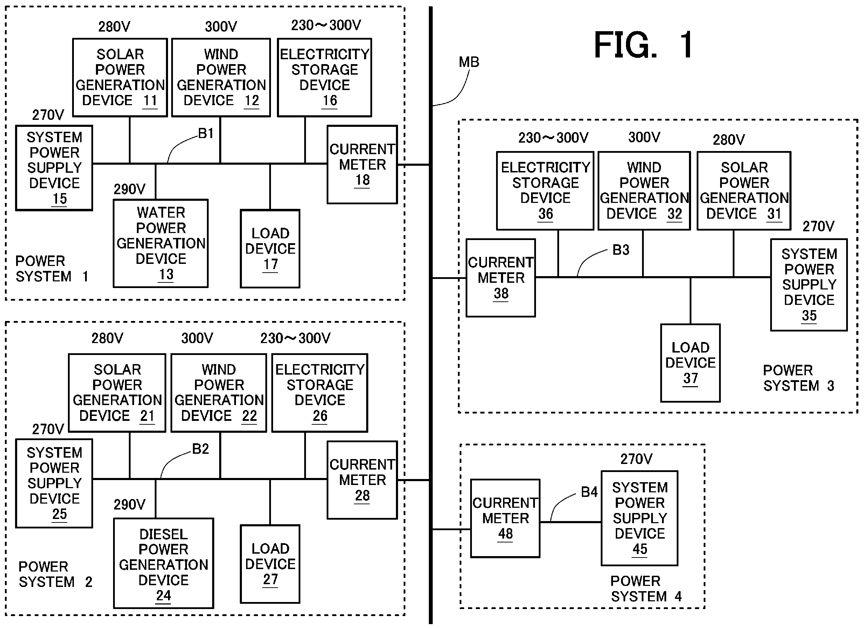

Fig. 1 is a block diagram schematically illustrating an example of a power supply-demand adjustment system according to a first embodiment of the present invention. The power supply-demand adjustment system according to the present invention is incorporated in a combined power system including a main DC bus MB, and a plurality of power systems 1 to 4 connected to the main DC bus MB. A power supply-demand adjustment method according to the present invention is applied to such a combined power system and is performed by the system.

The power systems 1 to 3 among the power systems 1 to 4 are natural energy-using power systems each including one or a plurality of power generation devices that generate power using natural energy.

The natural energy-using power system 1 has a DC bus B1 connected to main DC bus MB, and has a plurality of power generation devices that are connected to the DC bus B1 and that generate power using natural energy. As an example, the natural energy-using power system 1 includes a soler power generation device 11, a wind power generation device 12, and a water power generation device 13. An electricity storage device 16 that performs charging and discharging of power from/to the DC bus B1, and a system power supply device 15 that receives commercial power are further connected in the natural energy-using power system 1. In this example, a load device 17 that consumes power for a customer owing this power system 1 is further connected.

Similarly, the natural energy-using power system 2 has a DC bus B2 connected to the main DC bus MB. The natural energy-using power system 2 has a solar power generation device 21, a wind power generation device 22, and a diesel power generation device 24 as power generation devices connected to the DC bus B2. An electricity storage device 26 that performs charging and discharging of power from/to the DC bus B2, and a system power supply device 25 that receives commercial power are further connected in the natural energy-using power system 2. A load device 27 that consumes power for a customer owing this power system 2 is further connected in this example.

Similarly, the natural energy-using power system 3 has a DC bus B3 connected to the main DC bus MB. The natural energy-using power system 3 has a solar power generation device 31 and a wind power generation device 32 as power generation devices connected to the DC bus B3 and generating power using natural energy. An electricity storage device 36 that performs charging and discharging of power from/to the DC bus B3, and a system power supply device 35 that receives commercial power are further connected in the natural energy-using power system 3. A load device 37 that consumes power for a customer owing this power system 3 is further connected in this example.

In the power system 4, only a system power supply device 45 that receives commercial power is connected to a DC bus B4 connected to the main DC bus MB.

A device (not illustrated) that converts power to a predetermined DC voltage is included in each of the power generation devices, the electricity storage device, and the system power supply device included in each of the power systems 1 to 3, and supplies or receives DC power to/from the associated one of the DC buses B1 to B3. Current flows in and out, that is, current can flow in both directions under various conditions between each of the DC buses B1 to B3 and the main DC bus MB. The power systems 1 to 3 have current meters 18, 28, and 38 that measure the amounts and directions of bidirectional current flowing between the power systems 1 to 3 and the main DC bus MB, respectively.

Since the power system 4 including only the system power supply device 45 basically only supplies power to the main DC bus MB, the current flows in one direction. The power system 4 also has a current meter 48 that measures the amount of the current flowing in the main DC bus MB.

A configuration common to the power systems 1 to 3 being the natural energy-using power systems is explained with reference to the power system 1 in Fig. 1. An output voltage is previously set to each of the solar power generation device 11, the wind power generation device 12, the water power generation device 13, and the system power supply device 15. For example, the output voltages of the respective devices are assumed as 300 V (Volts) for the wind power generation device 12, 280 V for the solar power generation device 11, 290 V for the water power generation device 13, and 270 V for the system power supply device 15. The "output voltage" in this case is an upper limit voltage that enables output to the DC bus B1 when the voltage of the DC bus B1 is equal to or lower than this output voltage.

The same holds for the power systems 2 and 3. An output voltage (for example, 270 V) is previously set in the system power supply device 45 also in the power system 4. For devices of the same type (for example, the wind power generation device 12 of the power system 1 and the wind power generation device 22 of the power system 2), different output voltages may be set in the power systems, respectively, or the same output voltage may be set. A device in which a higher output voltage is set is a device more preferentially used.

When generating no power, the solar power generation devices 11, 21, and 31, the wind power generation devices 12, 22, and 32, and the water power generation device 13 do not output any voltage to the DC buses B1 to B3, respectively.

Each of the electricity storage devices 16, 26, and 36 has a battery and a charging/discharging device, and inputs and outputs current in a predetermined voltage range. The voltage of each of the electricity storage devices 16, 26, and 36 has a rough correlation with the remaining battery level. The remaining battery level is higher when the voltage of each of the electricity storage devices 16, 26, and 36 is higher, and the charge capacity is lower when the voltage is lower. The voltages of the electricity storage devices 16, 26, and 36 change, for example, in a range between 230 V and 300 V. The electricity storage devices 16, 26, and 36 basically discharge when the voltages are higher than the voltages of the DC buses B1, B2, and B3 and are charged when the voltages are lower than the voltages of the DC buses B1, B2, and B3, respectively.

The load devices 17, 27, and 37 operate when the voltages of the DC buses B1, B2, and B3 are between 230 V and 300 V, respectively.

In one power system, a device in which a higher output voltage is set is a device more preferentially used. The same output voltage may be set in a plurality of devices and these devices have the same priority in this case. However, a difference in the output voltage that enables output to the DC bus is set between at least two of the devices included in one power system.

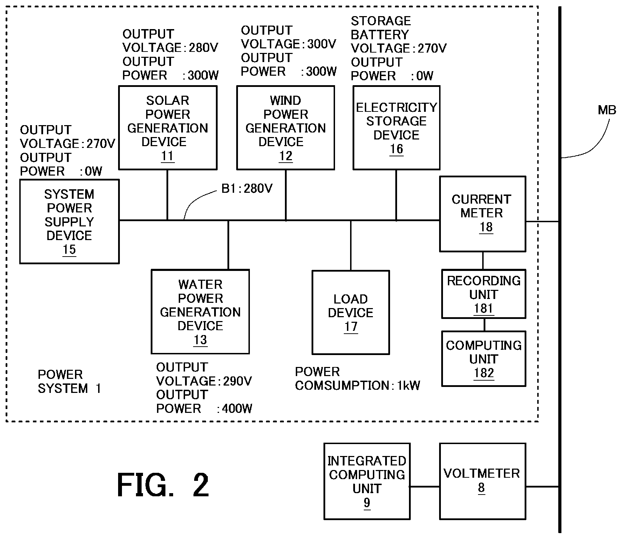

An operation in one power system is explained below with reference to Fig. 2 with the power system 1 illustrated in Fig. 1 taken as an example. As described above, the electricity storage device 16, the solar power generation device 11, the wind power generation device 12, the water power generation device 13, and the system power supply device 15 are used more preferentially as the set output voltage is higher. For example, when the electricity storage device 16, the solar power generation device 11, the wind power generation device 12, the water power generation device 13, and the system power supply device 15 all generate power or are capable of supplying power, power of the wind power generation device 12 where the output voltage is highest is preferentially output. Whether to output power of other devices is determined depending on the power consumption of the load device 17.

Specifically, when the power consumption of the load device 17 is 1 kW, the solar power generation device 11 generates power of 300 W, the wind power generation device 12 generates power of 300 W, and the water power generation device 13 generates power of 400 W as illustrated in Fig. 2, the total generated power is also 1 kW and the supply and demand are balanced. The voltage of the DC bus B1 in this case is 280 V, which is the lowest output voltage of the solar power generation device 11.

Although this operation is performed in a moment in practice, it is performed as follows in chronological order. First, power of the wind power generation device 12 in which the highest output voltage 300V is set and that has a highest priority is preferentially used for the power consumption of 1 kW of the load device 17. That is, power is output from the wind power generation device 12 to the DC bus B1. However, since power is short to the demand of the load device 17, the voltage of the DC bus B1 decreases and drops to 290 V. When the voltage of the DC bus B1 reaches 290 V, power starts being output from the water power generation device 13 where the set output voltage is 290 V. However, even with the addition of the water power generation device 13, power is insufficient and the voltage of the DC bus B1 drops to 280 V. When the voltage of the DC bus B1 reaches 280 V, power starts being output from the solar power generation device 11 where the set output voltage is 280 V, so that a balance with the power demand of the load device 17 is finally achieved and the voltage is stabilized.

In this way, the voltage of the DC bus B1 fluctuates to achieve a balance with the power demand of the load device. It indicates in this case that devices on the supply side, such as the wind power generation device 12, have more surplus power as the voltage of the DC bus B1 is higher, and the devices on the supply side have less surplus power as the voltage of the DC bus B1 is lower.

In the case in which the power systems 1 to 4 are provided as in Fig. 1, the same operation as that described above is performed in each of the power systems. Accordingly, the voltages of the DC buses B1 to B4 of the power systems 1 to 4 are respectively stabilized at a balanced level. A similar operation is performed also in the combined power system being the entire system including the power systems 1 to 4 and the main DC bus MB. In the entire system, the voltage of the main DC bus MB is stabilized at a level where the power is balanced between the supply side and the demand side. It indicates that the power system on the supply side including the wind power generation device and the like has more surplus power as the voltage of the main DC bus MB is higher and the power system on the supply side has less surplus power as the voltage of the main DC bus MC is lower.

Fig. 2 further illustrates a recording unit 181 and a computing unit 182 provided to the current meter 18 of the power system 1 as an example. The recording unit 181 has a function to record measurement values of the amount and direction of current measured by the current meter 18. Recording of the current measurement values can, for example, be continuously performed. In another example, a voltmeter (not illustrated) detects a timing when the voltage of the DC bus B1 is substantially stabilized and an instantaneous value of the current at the timing can be recorded as the measurement value.

The computing unit 182 performs computing to perform a power price determining method described later on the basis of the measurement values recorded by the recording unit 181 and determine the price of power selling or power purchase of each of the power systems. The computing unit 182 can be implemented by a processor that executes a predetermined program, for example, a CPU of a computer.

Fig. 2 further illustrates a voltmeter 8 that measures the voltage of the main DC bus MB, and an integrated computing unit 9 as an example. The integrated computing unit 9 can perform computing to determine the price of power selling or power purchase of each of the power systems, in place of the computing unit 182 of each of the power systems. The integrated computing unit 9 can, for example, be owned and managed by an administrator of the whole combined power system. In this case, the integrated computing unit 9 acquires the measurement values of the current from the recording unit 181 of the current meter 18 in each of the power systems and performs computing related to the power price on the basis of the measurement values. Alternatively, the integrated computing unit 9 may acquire the voltage of the main DC bus MB from the voltmeter 8 in addition to the measurement values of the current and perform computing related to the power price on the basis thereof. The integrated computing unit 9 can also be implemented by a processor that executes a predetermined program, for example, a CPU of a computer.

The power price determining method realizing the power supply-demand adjustment system according to the present invention is explained. It is assumed in the explanations that the power systems are owned by customers, respectively. The power supply-demand adjustment system of the present invention provides each of the customers with an incentive to adjust power supply and demand of the own power system. That is, this incentive is to restrict the demand when the power price is increased and stimulate the demand when the power price is decreased.

Each customer owns the power generation device or the system power supply device and the load device in the power system and performs power selling and power purchase for other power systems (for example, the power systems 1 to 3 in Fig. 1). The customer may own only the power supply device and only power selling is performed in this case (for example, the power system 4 in Fig. 1). Each of the power systems may be provided, for example, in a permanently installed infrastructure such as a general household or a factory, or may be provided in a temporarily installed infrastructure such as a container house or a prefabricated house.

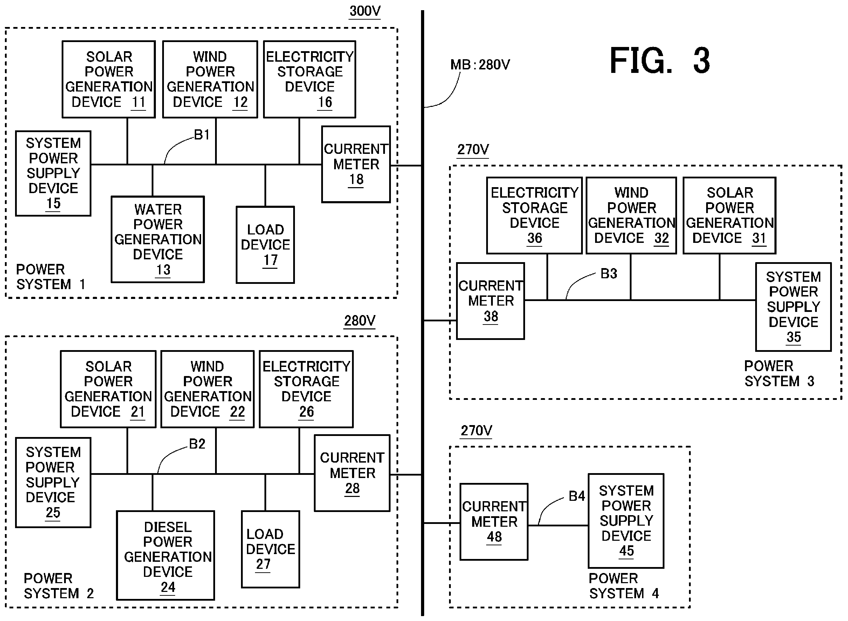

Fig. 3 illustrates an example of a state in which the voltage of the main DC bus MB of the combined power system has been determined at a moment. That is, it is assumed that the voltage of the main DC bus MB is finally balanced at a stable instantaneous value and, for example, has 280 V. At this time, as an example, the voltage of the DC bus B1 of the power system 1 is determined to be an instantaneous value of 300 V, the voltage of the DC bus B2 of the power system 2 is determined to be an instantaneous value of 280 V, the voltage of the DC bus B3 of the power system 3 is determined to be an instantaneous value of 270 V, and the voltage of the DC bus B4 of the power system 4 is determined to be an instantaneous value of 270 V.

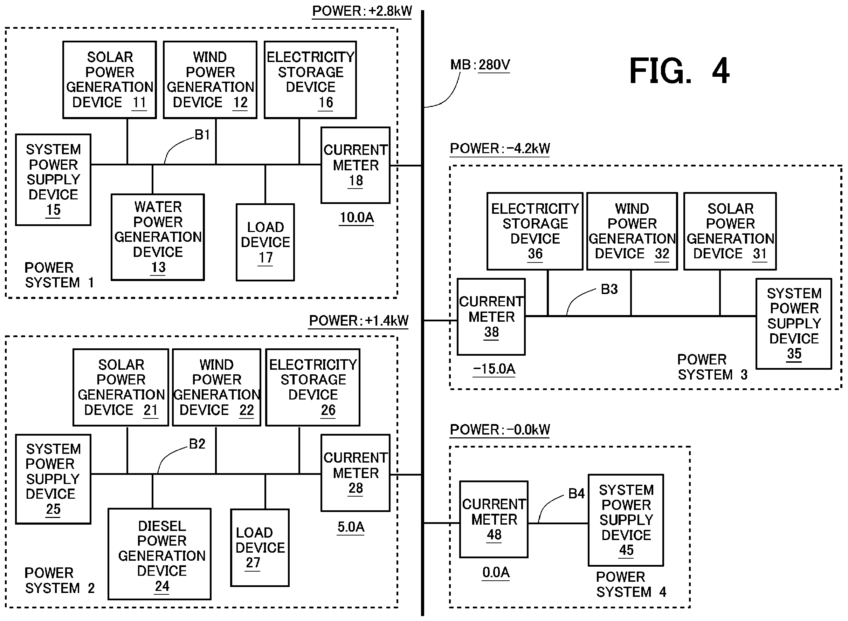

Fig. 4 illustrates an example of the measurement values of the respective current meters 18, 28, 38, and 48 of the power systems 1 to 4 when the instantaneous values of the voltages of the DC buses B1 to B4 of the power systems 1 to 4 and the value of the main DC bus MB of the combined power system are determined as illustrated in Fig. 3, that is, when the power supply-demand balance is achieved in the whole combined power system.

When a measured value of current is positive, this means that power is supplied from the relevant power system to the main DC bus MB. That is, the power supply is performed because the relevant power system has surplus power. When a measured value of current is negative, this means that the relevant power system consumes power from the main DC bus MB. That is, power in the relevant power system is insufficient. In this example, when the voltage of the main DC bus MB is 280 V, the power system 1 and the power system 2 supply power with a current of 10 A (amperes) and a current of 5 A to the main DC bus MB, respectively, and the power system 3 consumes power with a current of 15 A from the main DC bus MB. Since the voltage of the DC bus B4 is lower than that of the main DC bus MB (see Fig. 3), no current flows in the power system 4 (zero (0) A).

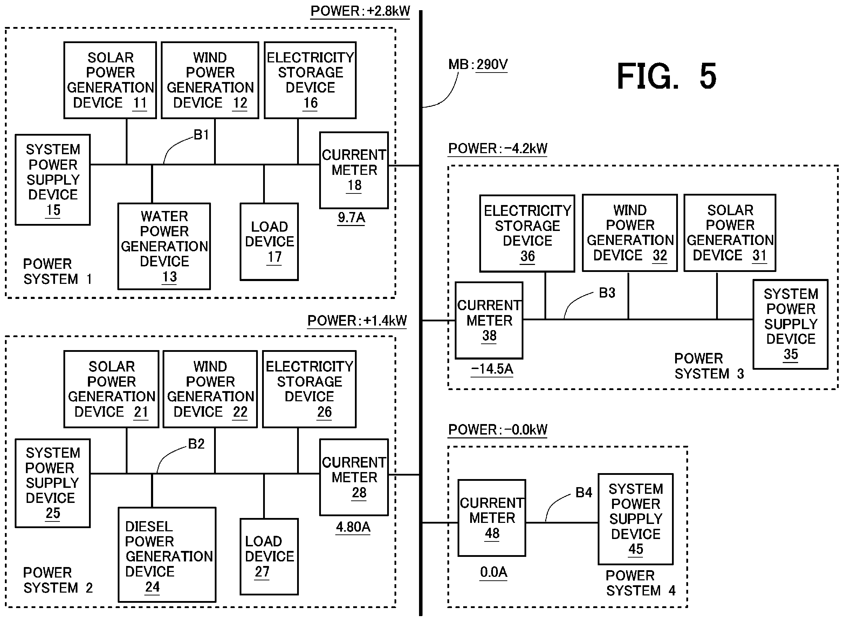

Fig. 5 illustrates a state in which a surplus is caused in generated power of the whole combined power system and the voltage of the main DC bus MB has increased to 290 V after the states illustrated in Figs. 3 and 4 are obtained. It is assumed in this case that the power supplied from each of the power systems 1 to 4 to the main DC bus MB and the consumed power from the main DC bus MB do not change. However, since the voltage of the main DC bus MB has become 290 V, the measurement values of the current meters 18, 28, 38, and 48 are 9.7 A in the power system 1, 4.8 A in the power system 2, -14.5 A in the power system 3, and 0.0 A in the power system 4. The absolute values of the current values are respectively decreased relative to those at the time when the voltage of the main DC bus MB is 280 V in Fig. 4.

This indicates that the price of power to be sold or purchased decreases although the amounts of power demands of the power systems 1 to 4 do not change. That is, when the amount of a power demand of the whole combined power system is constant, the voltage of the main DC bus MB increases and the current consequently decreases, resulting in a decrease in the price of power to be sold or purchased when the power in the whole system becomes excessive. Conversely, when the power in the whole system is depleted, the voltage of the main DC bus MB decreases and the current consequently increases, resulting in an increase in the price of power to be sold or purchased. Accordingly, the power price reflecting the supply-demand situation of power can be determined.

The measurement of the current by each of the current meters can be performed by various methods. As an example, each of the current meters continuously measures the current. The measurement values are recorded, for example, in the recording unit 181 illustrated in Fig. 2. For example, the computing unit 182 or the integrated computing unit 9 illustrated in Fig. 2 integrates the measured amounts and directions (positive or negative) of the current for a predetermined period using the continuously recorded measurement values. The price of power selling or power purchase for power systems other than the power system in which the relevant current meter is installed can be determined on the basis of the integrated value.

As another example, each of the current meters measures instantaneous values of the current at a time when the voltage of the relevant DC bus and the voltage of the main DC bus are balanced and stabilized or substantially stabilized. The measurement values are recorded, for example, in the recording unit 181 illustrated in Fig. 2. At the same time, for example, the voltmeter 8 illustrated in Fig. 2 records the instantaneous value of the voltage of the main DC bus. For example, the computing unit 182 or the integrated computing unit 9 illustrated in Fig. 2 can determine the price of power selling or power purchase for power systems other than the power system in which the relevant current meter is installed, on the basis of the instantaneous values of the amount and direction of the current measured by the current meter and the instantaneous value of the voltage of the main DC bus.

According to the present invention, the power price reflecting power supply and demand can be easily determined only with installation of a current meter between each of power systems in a combined power system and the main DC bus MB. Therefore, the power price reflecting the supply-demand situation can be promptly provided. Furthermore, the present invention can set the power price reflecting supply-demand adjustment and can adjust the supply and demand even if the server of the external agency is down or the communication infrastructure is down due to certain reasons.

According to the present invention, a customer owing a power system is provided with an incentive to restrict the demand (consumption) when the power purchase price is increased and stimulate the demand (consumption) when the power purchase price is decreased. This adjustment of the demand serves as a negative feedback on the voltage of the main DC bus MB. As a result, fluctuation of the voltage of the main DC bus MB in an appropriate range is realized.

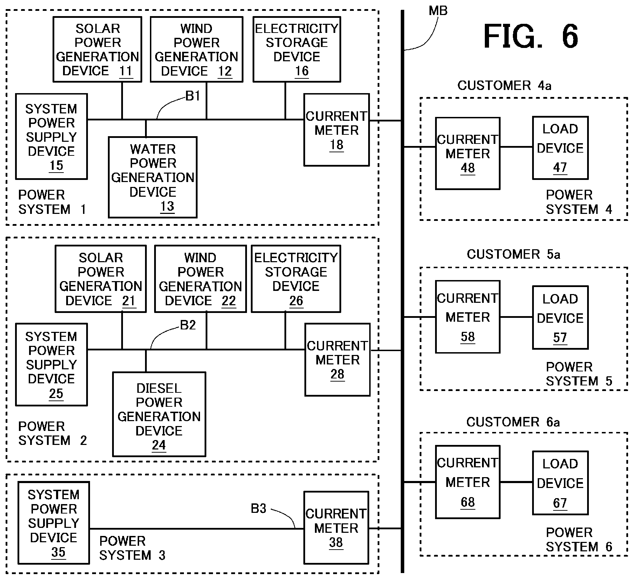

Fig. 6 illustrates a second embodiment of the present invention. In the second embodiment, power systems 1, 2, and 3 that supply power, and power systems 4, 5, and 6 that are respectively owned by customers 4a, 5a, and 6a and that consume power are provided separately. Current meters 48, 58, and 68 are installed also between load devices 47, 57, and 67 of the power systems 4, 5, and 6 and the main DC bus MB, respectively. In this case, the power systems 1, 2, and 3 perform only power generation and the power systems 4, 5, and 6 perform only consumption. Each of administrators of the power systems 1, 2, and 3 may be an administrator of the whole combined power system. This administrator can supply power to the power systems 4, 5, and 6 and can also obtain proceeds from power selling from the customers 4a, 5a, and 6a.

Specific configurations of the embodiments of the present invention described above are not limited to the examples illustrated in the drawings. Various modifications can be made within the spirit of the present invention.

### Reference Signs List

1, 2, 3, 4, 5, 6 power system
11, 21, 31 soler power generation device
12, 22, 32 wind power generation device
13 water power generation device
15, 25, 35, 45 system power supply device
16, 26, 36 electricity storage device
17, 27, 37 load device
18, 28, 38, 48, 58, 68 current meter
181 recording unit
182 computing unit
24 diesel power generation device
8 voltmeter
9 integrated computing unit
B1, B2, B3, B4 DC bus
MB main DC bus

## Claims

1. A power supply-demand adjustment system for adjusting, in a combined power system including a main DC bus and a plurality of power systems each connected to the main DC bus, power supply and demand between the power systems, wherein
at least one of the power systems is a natural energy-using power system including at least a DC bus connected to the main DC bus, one or a plurality of power generation devices that are each connected to the DC bus and that generate power using natural energy, a system power supply device that receives commercial power from a power provider, and an electricity storage device that is charged from or discharges to the DC bus, and a difference between respective output voltages that enable output to the DC bus is previously set between at least two of the one or plural power generation devices, the system power supply device, and the electricity storage device, and
each of the power systems has a current meter that measures an amount and a direction of current flowing to and from the main DC bus.

2. The power supply-demand adjustment system according to claim 1, comprising:
a recording unit that records measurement values of the amount and the direction of current that have been measured by each of the current meters; and
a computing unit that determines a price of power to be sold to or purchased from power systems other than a relevant power system on a basis of the measurement values recorded in the recording unit.

3. The power supply-demand adjustment system according to claim 2, wherein the computing unit determines a price of power to be sold to or purchased from power systems other than a relevant power system on a basis of integrated values of the amounts and the directions of current that have been measured.

4. The power supply-demand adjustment system according to claim 2, further comprising a voltmeter that measures a voltage of the main DC bus, wherein
the computing unit determines a price of power to be sold to or purchased from power systems other than a relevant power system on a basis of instantaneous values of the amount and the direction of current that have been measured, and the measured voltage of the main DC bus.

5. The power supply-demand adjustment system according to any one of claims 1 to 4, wherein at least one of the power systems includes a load device connected to the DC bus.

6. The power supply-demand adjustment system according to any one of claims 1 to 4, wherein at least one of the power systems includes only a load device.

7. The power supply-demand adjustment system according to any one of claims 1 to 4, wherein at least one of the power systems includes only a system power supply device that receives commercial power.

8. A power supply-demand adjustment method for adjusting, in a combined power system including a main DC bus and a plurality of power systems each connected to the main DC bus, power supply and demand between the power systems, wherein at least one of the power systems is a natural energy-using power system including a DC bus connected to the main DC bus, one or a plurality of power generation devices that are each connected to the DC bus and that generate power using natural energy, a system power supply device that receives commercial power from a power provider, and an electricity storage device that is charged from or discharges to the DC bus, and a difference between respective output voltages that enable output to the DC bus is previously set between at least two of the power generation devices, the system power supply device, and the electricity storage device, the method comprising:
measuring an amount and a direction of current flowing between each of the power systems and the main DC bus and determining a price of power to be sold to or purchased from each of the power systems on a basis of the amount and the direction of current that have been measured.
